# EUROPEAN PATENT SPECIFICATION

(11) **EP 3 875 795 B1**
(45) Date of publication and mention of the grant of the patent: **16.11.2022**
(21) Application number: 19878038.9
(22) Date of filing: 25.09.2019
(51) Int. Cl.: F16C 33/46, F16C 19/26, F16C 33/56, F16C 33/58, F16C 33/66

(54) **CYLINDRICAL ROLLER BEARING**
WÄLZLAGER MIT ZYLINDRISCHEN WÄLZKÖRPERN
ROULEMENT À ROULEAUX CYLINDRIQUES

(30) Priority: 31.10.2018 JP 2018205628
(43) Date of publication of application: 08.09.2021
(73) Proprietor: NSK Ltd., Tokyo 141-8560 (JP)
(72) Inventor: SOGA, Shuji, Fujisawa-shi, Kanagawa 251-8501 (JP); AOKI, Mitsuho, Fujisawa-shi, Kanagawa 251-8501 (JP); KATSUNO, Yoshiaki, Fujisawa-shi, Kanagawa 251-8501 (JP)
(74) Representative: Grünecker Patent- und Rechtsanwälte PartG mbB
(86) International application number: PCT/JP2019/037715
(87) International publication number: WO 2020/090305

(56) References cited:
- DE-A1- 19 635 137
- JP-A- H11 315 841
- JP-A- H11 315 841
- JP-U- S54 180 861
- US-A- 3 628 839
- US-A- 3 628 839

## Description

### TECHNICAL FIELD

The present invention relates to a cylindrical roller bearing, and more particularly, to a cylindrical roller bearing suitable for a machine tool spindle.

### BACKGROUND ART

In a machine tool spindle, a cylindrical roller bearing is often used as a rear bearing. The cylindrical roller bearing allows axial sliding as well as rolling contact between an inner ring raceway surface or an outer ring raceway surface and rolling elements. In the machine tool spindle, a difference in thermal expansion in an axial direction occurs between a housing on a fixed side and a rotation shaft on a free side during operation. Therefore, the cylindrical roller bearing slides in the axial direction to release an axial load acting on a front bearing and the rear bearing due to a difference in thermal expansion in the axial direction, thereby preventing the bearing from being damaged.

As a cylindrical roller bearing used for a machine tool spindle, there is known a cylindrical roller bearing in which, in order to improve lubrication property, a recessed portion is formed in a radially outward portion of a guide surface of a circular ring portion of a cage to provide a guide protruding portion that guides a roller end surface of the cylindrical roller on a radially inward side thereof, and a lubricant holding protruding portion that prevents a lubricant from moving radially outward is formed in a radially outward portion of the recessed portion (for example, see Japanese Patent No. 4618197).

Further, as an attempt to improve lubrication property of a cylindrical roller bearing, there are known a cylindrical roller bearing in which a recessed portion for oil storage is formed on a surface of a pocket of a cage facing a roller end surface (for example, see Japanese Patent No. 3723247), and a cylindrical roller bearing in which two thick protruding portions that reduce inclination of a cylindrical roller are formed on an axial inner wall surface of the pocket, and a lubricant is held by a recessed portion between the two protruding portions and a surrounding recessed portion (for example, see JP-A-H10-153217).

JP H11 315841 A discloses a cylindrical roller bearing according to the preamble of claim 1.

### SUMMARY OF INVENTION

### TECHNICAL PROBLEM

A bearing for a machine tool spindle is mainly used for oil-air lubrication or grease lubrication. In a case of use in the oil-air lubrication, since an action of a centrifugal force during low-speed rotation or the like is small, there is a problem that oil tends to stay inside the bearing, so that excess oil is stirred and a temperature of the bearing rises abnormally. Similarly, in a case of use in the grease lubrication, there is a problem that excess grease is not smoothly discharged during an initial running-in operation, so that a temperature rise occurs and a running-in operation time becomes long.

The cylindrical roller bearing used in the machine tool spindle is often incorporated up to a slight positive radial clearance in order to maintain better sliding performance. Even when incorporated up to the positive radial clearance, the radial clearance is often a negative radial clearance that does not affect the sliding performance due to influence of a centrifugal force or heat during a high-speed operation, but the positive radial clearance during incorporation may be too large depending on a variation in incorporation conditions, or when used during a low-speed operation, an initial clearance may not be clogged and the positive radial clearance may remain even during operation. The rear bearing may hardly receive a cutting load and be used in a vertical posture, and a state occurs in which the rear bearing is operated without an external load being applied to the cylindrical roller. When such conditions overlap each other, a cylindrical roller can freely move without being restrained by a raceway ring during operation, a skew motion occurs, and a roller end surface and a flange portion come into contact with each other, which may cause wear and damage on both.

In the cylindrical roller bearings described in Japanese Patent No. 4618197 and Japanese Patent No. 3723247, since the recessed portion does not penetrate from a radially inward side to a radially outward side, the lubricant can be stored, but discharge property is not satisfactory, and the temperature may rise when used for the oil-air lubrication or the grease lubrication. In particular, in the grease lubrication, storing a large amount of grease in the cage means that even if the running-in operation is completed under a certain temperature condition, the grease may soften and suddenly jump into the bearing to raise the temperature when used at an ambient temperature higher than that during the running-in operation.

On the other hand, in the cylindrical roller bearing described in JP-A-H10-153217, although oil discharge property of the lubricant is satisfactory, a roller end surface may enter the surrounding recessed portion to cause screw of the cylindrical roller due to a pocket clearance.

The present invention has been made in view of the above-described problems, and an object thereof is to provide a cylindrical roller bearing having satisfactory lubrication property in oil-air lubrication or grease lubrication and capable of preventing skew of a cylindrical roller.

### SOLUTION TO PROBLEM

The object of the present invention is achieved by the features of claim 1.
The following configurations are part of the original disclosure.
(1) A cylindrical roller bearing including:
   an outer ring having an outer ring raceway surface formed on an inner circumferential surface thereof;
   an inner ring having an inner ring raceway surface formed on an outer circumferential surface thereof and having a pair of flange portions at both axial end portions of the inner ring raceway surface;
   a plurality of cylindrical rollers rollably arranged between the outer ring raceway surface and the inner ring raceway surface; and
   a cage made of resin and having a pair of circular ring portions and a plurality of column portions connecting the pair of circular ring portions in an axial direction, the cage forming a plurality of pocket portions that rotatably hold the plurality of cylindrical rollers respectively,
   wherein a single recessed groove is formed in an inner wall surface of each of the pair of circular ring portions forming the pocket portion, the recessed groove facing at least a center point of a roller end surface of the cylindrical roller and open from an inner circumferential surface to an outer circumferential surface of the circular ring portion,
   wherein the recessed groove is spaced apart in a circumferential direction from a pocket corner portion between the circular ring portion and the column portion,
   wherein the recessed groove is formed such that a circumferential width thereof is equal from an outer circumferential side end surface to an inner circumferential side end surface thereof, or a circumferential width at the outer circumferential side end surface thereof is larger than a circumferential width at the inner circumferential side end surface thereof, and
   wherein when the circumferential width of the recessed groove at the outer circumferential side end surface is M, a roller diameter of the cylindrical roller is D, a height of the flange portion is H, and a circumferential pocket clearance is ΔP, M - ΔP ≤ D-H and 0.2 x D ≤ M - ΔP are satisfied.

### ADVANTAGEOUS EFFECTS OF INVENTION

According to the cylindrical roller bearing according to the present invention, satisfactory lubrication property can be obtained in oil-air lubrication or grease lubrication, and skew of the cylindrical roller can be prevented. In addition, by defining an upper limit of a size of the recessed groove by a relationship M - ΔP ≤ D - H, even when a pocket clearance is formed in the circumferential direction, the roller end surface of the cylindrical roller is supported by a flat surface in the inner wall surface of the circular ring portion, a skew motion of the cylindrical roller can be prevented, and a thickness of the circular ring portion can be sufficiently ensured. By defining a lower limit of the recessed groove by a relationship 0.2 x D ≤ M - ΔP the circumferential width M of the outer circumferential side end of the recessed groove is ensured, whereby oil discharge property is improved, running-in operation time is reduced, and temperature rise due to stirring resistance is prevented.

### ADVANTAGEOUS EFFECTS OF INVENTION

Fig. 1 is a vertical cross-sectional view showing a cylindrical roller bearing according to an embodiment of the present invention.
Fig. 2A is a perspective view of a cage for the cylindrical roller bearing in Fig. 1 as viewed from a radially outward side, and Fig. 2B is a perspective view of the cage as viewed from a radially inward side.
Fig. 3 is a plan view showing a pocket of the cage for the cylindrical roller bearing in Fig. 1.
Fig. 4 is a cross-sectional view taken along a line IV-IV in Fig. 1.
Fig. 5 is a perspective view of the cylindrical roller bearing without an inner ring, for explaining a flow of excess oil according to the present embodiment.
Fig. 6 is a perspective view of the cage, for explaining a grease remaining position on a cage side according to the present embodiment.
Fig. 7A is a perspective view of the cylindrical roller bearing in which a part of the inner ring is cut away, for explaining the grease remaining position on a roller side according to the present embodiment, and Fig. 7B is an enlarged view of a portion VII in Fig. 7A.
Figs. 8A to 8D are plan views showing modifications of a recessed groove of the cage of the cylindrical roller bearing.
Fig. 9A is a cross-sectional view of the cylindrical roller bearing in a case where an inner ring guide type cage is applied, and Fig. 9B is a cross-sectional view of the cylindrical roller bearing in a case where an outer ring guide type cage is applied.
Fig. 10 is a cross-sectional view showing another modification of the recessed groove of the pocket of the cage for the cylindrical roller bearing according to the present invention.

### DESCRIPTION OF EMBODIMENTS

Hereinafter, a cylindrical roller bearing according to an embodiment of the present invention will be described in detail with reference to the drawings.

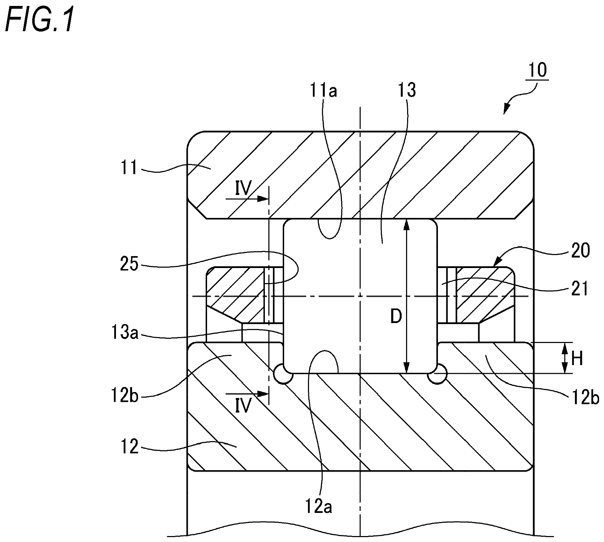

As shown in Fig. 1, a cylindrical roller bearing 10 includes an outer ring 11 having an outer ring raceway surface 11a formed on an inner circumferential surface thereof, an inner ring 12 having an inner ring raceway surface 12a formed on an outer circumferential surface thereof, a plurality of cylindrical rollers 13 rollably arranged between the outer ring raceway surface 11a and the inner ring raceway surface 12a, and a roller guide type cage 20 forming a plurality of pocket portions 21 that rotatably hold the plurality of cylindrical rollers 13 respectively. The inner ring 12 has a pair of flange portions 12b, 12b at both axial end portions of the inner ring raceway surface 12a, the flange portions 12b, 12b protruding radially outward from the inner ring raceway surface 12a.

The cylindrical roller bearing 10 according to the present embodiment can be applied to both an oil-air lubrication method and a grease lubrication method mainly used in a machine tool, that is, the cylindrical roller bearing 10 may be lubricated by any lubricant of oil and grease.

The cage 20 may be made of, for example, a phenol resin containing a base material, and as the base material, paper, cotton cloth, asbestos cloth, glass fiber cloth and nylon fabric may be used for a laminated plate, and wood powder, cotton, pulp, asbestos, mica, glass fiber or the like may be used for a molded product. The cage 20 is made of a synthetic resin material such as polyamide, polyacetal, polyether ether ketone, polyimide or polyphenylene sulfide, and a reinforcing material such as glass fiber, carbon fiber or aramid fiber may be added to the resin as necessary. Alternatively, the cage 20 may be made of iron subjected to copper alloy, silver plating or the like.

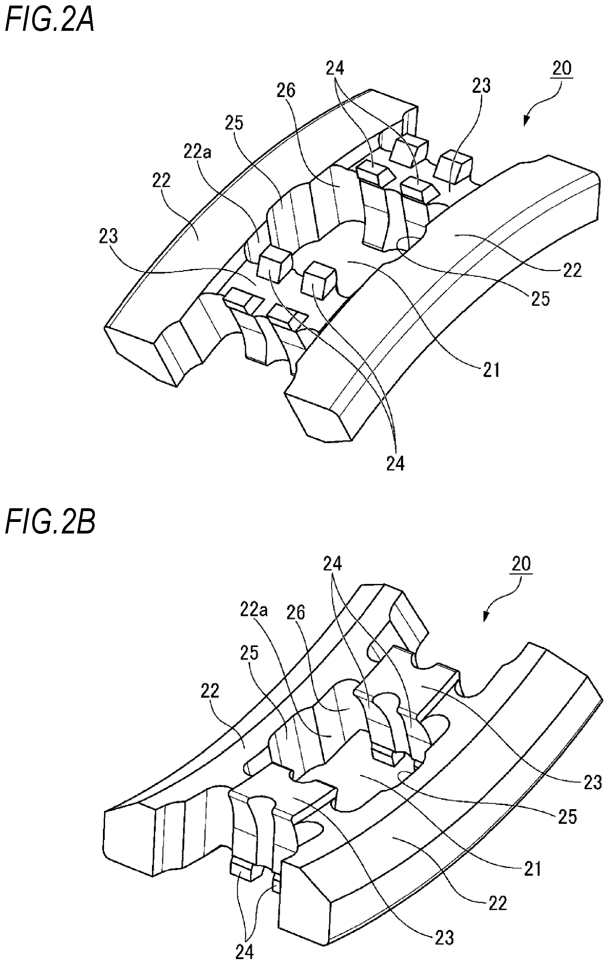

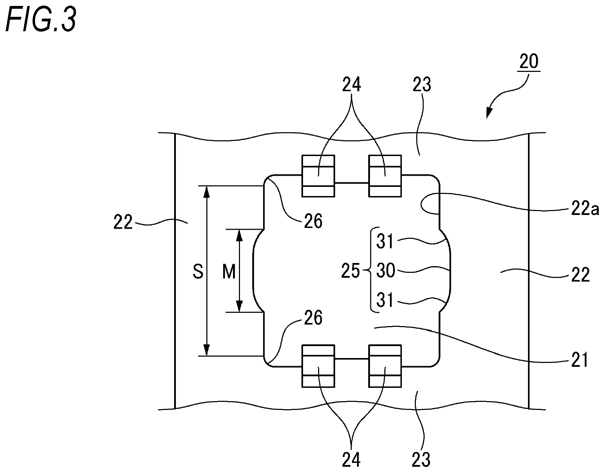

As shown in Figs. 2A, 2B and 3, the cage 20 includes a pair of circular ring portions 22, 22 and a plurality of column portions 23 connecting the pair of circular ring portions 22, 22 in an axial direction. An axially intermediate portion of the column portion 23 is provided with a pair of roller holding portions 24, 24 arranged so as to be spaced apart from each other in the axial direction. The pair of roller holding portions 24, 24 have a predetermined axial length, are formed so as to protrude in a circumferential direction from a side surface of the column portion 23 located therebetween, and restrain the cylindrical roller 13 on a radially outward side and a radially inward side thereof. An outer peripheral surface of the column portion 23 is provided more radially inward than outer diameters of the pair of circular ring portions 22, 22, and the pair of roller holding portions 24, 24 are formed to protrude radially outward from the outer peripheral surface of the column portion 23. In this way, the pair of roller holding portions 24, 24 formed by being divided in the axial direction can be elastically deformed when a force generated by mating of the cylindrical roller 13 is received, and can release a part of the force received by the column portion 23.

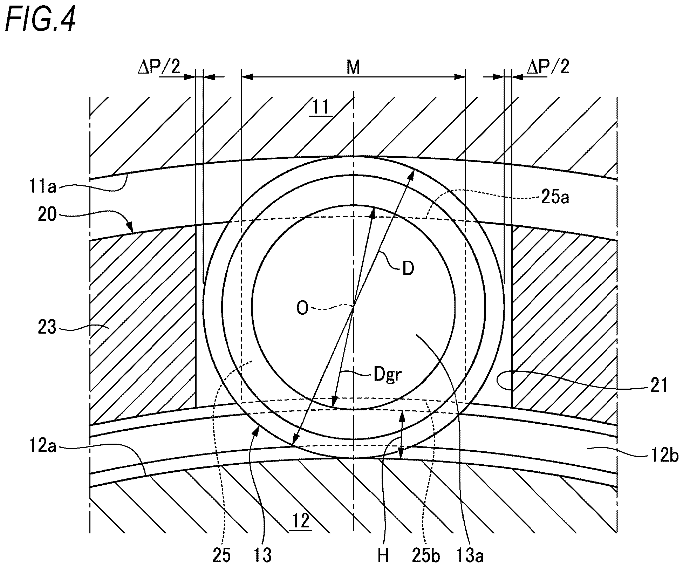

A single recessed groove 25 is formed in an inner wall surface of each of the pair of circular ring portions 22, 22 forming the pocket portion 21. The recessed groove 25 faces at least a center point O of a roller end surface 13a of the cylindrical roller 13 (see Fig. 4), and is open from an inner circumferential surface to an outer circumferential surface of the circular ring portion 22.

As shown in Fig. 3, in a case of the present embodiment, the recessed groove 25 has a straight surface 30 that is flat at a circumferentially intermediate portion, and curved surfaces 31, 31 that are provided on circumferentially both sides of the straight surface 30 and each have a concave curved cross-sectional shape. The recessed groove 25 is formed to have the same cross-sectional shape in the radial direction such that a circumferential width is equal from an outer circumferential side end surface 25a to an inner circumferential side end surface 25b.

In the present embodiment, the recessed groove 25 is formed at a position spaced apart in the circumferential direction from a curved pocket corner portion 26 between the circular ring portion 22 and the column portion 23, and flat surfaces 22a are respectively provided on circumferentially both sides of the recessed groove 25 in the inner wall surface of the circular ring portion 22. Therefore, when a circumferential width of the inner wall surface of the circular ring portion 22 excluding the pocket corner portion 26 is S, a circumferential width M of the outer circumferential side end surface 25a of the recessed groove 25 is set to M < S.

Such a recessed groove 25 has the following advantages in both oil-air lubrication and grease lubrication, which are lubrication methods mainly used in a machine tool spindle.

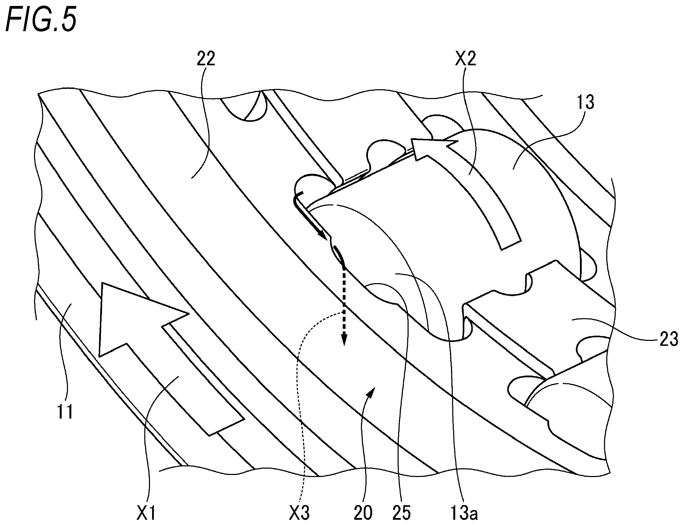

That is, in a case of use in the oil-air lubrication, as shown in Fig. 5, in a process in which excess oil that causes a temperature rise is discharged from inside of the bearing to outside by a centrifugal force acting on the cage 20, the oil is actively discharged from the recessed groove 25 to an outer ring side, whereby the oil can be prevented from returning to the inside of the bearing. In Fig. 5, X1 indicates a revolution direction of the cage 20, X2 indicates a rotation direction of the cylindrical roller 13, and X3 indicates a flow of the excess oil.

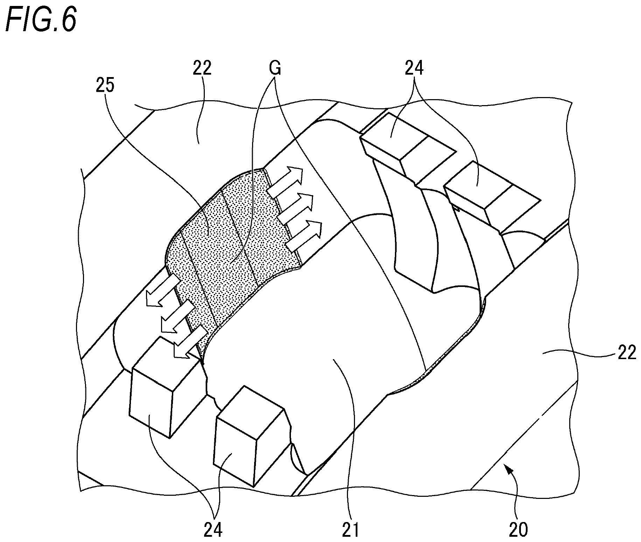

In a case of use in the grease lubrication, the recessed groove 25 also serves as a path for discharging the excess grease to the outside of the bearing during an initial running-in operation, and a running-in operation time can be shortened. After the running-in is completed, as shown in Fig. 6, a part of grease G remains in the recessed groove 25, and base oil can be supplied to a contact portion of the cage 20 with the roller end surface 13a, so that lubrication property can be satisfactorily maintained. Since the recessed groove 25 is provided on a cage side, a center portion of the roller end surface 13a does not come into contact with the cage 20, and thus the grease G is not scraped off by a rotational motion, and a part of the grease G continues to remain in the center portion of the roller end surface 13a even during operation.

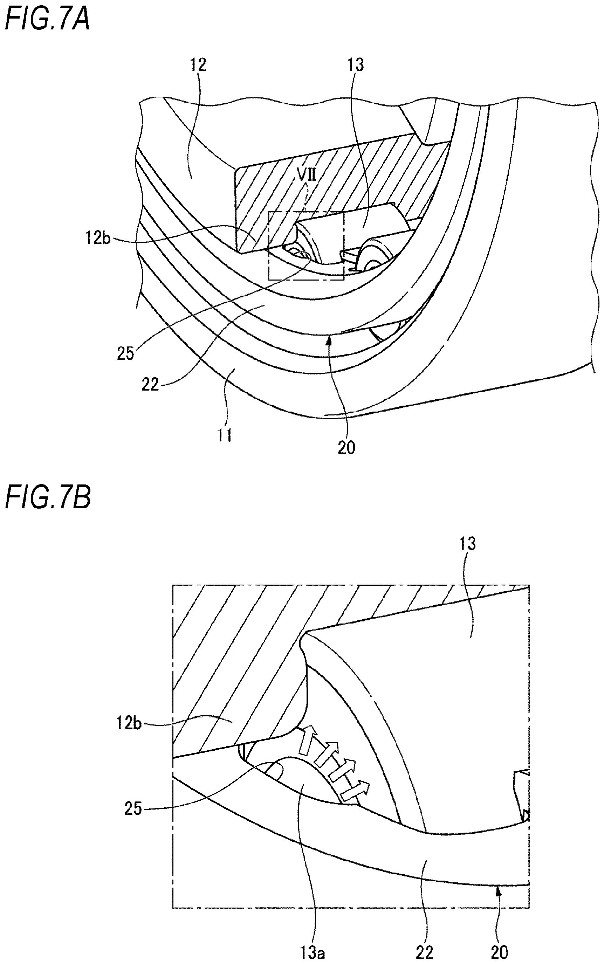

As shown in Figs. 7A and 7B, since the base oil is supplied from the residual grease toward a radially outward side of the roller end surface 13a due to a centrifugal force during rotation of the cylindrical roller 13, the lubrication property between a sliding contact portion between the roller end surface 13a and a flange surface of the flange portion 12b can be satisfactorily maintained, and the contact portion can be prevented from being worn and damaged. Arrows in Figs. 6 and 7B indicate supply paths of the base oil of the grease.

In the cylindrical roller bearing 10 according to the present embodiment, when the cylindrical roller 13 is to be skewed, the cylindrical roller 13 is supported by the flat surface 22a in the inner wall surface of the circular ring portion 22 where the recessed groove 25 is not formed, so that effects of alleviating a skew motion while improving the lubrication property can be obtained. That is, even when the cylindrical roller bearing 10 used as a rear bearing of the machine tool spindle is operated in a positive radial clearance, or is operated without an external load being applied to the cylindrical roller 13, and the cylindrical roller 13 freely rotates without being restrained by a raceway ring, the skew motion is prevented, and the roller end surface 13a and the flange surface of the flange portion 12b can be prevented from being worn and damaged due to contact therebetween.

Here, as shown in Fig. 4, when the circumferential width of the recessed groove 25 at the outer circumferential side end surface 25a is M, a roller diameter of the cylindrical roller 13 is D, a height of the flange portion 12b is H, and a circumferential pocket clearance is ΔP, M - ΔP ≤ D - H is satisfied. Thereby, excess lubricant can be efficiently discharged from the recessed groove 25.

Even when the pocket clearance ΔP is provided in the circumferential direction, the roller end surface 13a of the cylindrical roller 13 is supported by the flat surface 22a in the inner wall surface of the circular ring portion 22, and the skew motion of the cylindrical roller 13 can be prevented. Since an upper limit of a size of the recessed groove 25 is defined, a thickness of the circular ring portion 22 can be sufficiently ensured. Here, even if the circumferential width M of the outer circumferential side end surface 25a of the recessed groove 25 is increased to increase an area of the grease that can remain on the roller end surface 13a without being scraped off by the recessed groove 25, the grease is scraped off by the flange portion 12b, and thus the area of the grease that remains on the roller end surface 13a cannot be increased to be equal to or larger than an area of the grease that remains after being scraped off by the flange portion 12b. Therefore, since a maximum value of the area of the grease that can remain on the roller end surface 13a is defined by the height H of the flange portion 12b, the circumferential width M is also defined by the height H of the flange portion 12b.

The size of the recessed groove 25 is more preferably M - ΔP ≤ D - 2H. D - 2H (= Dgr) represents a diameter of the grease that can remain on the roller end surface 13a without being scraped off by the flange portion 12b. The lubricant retained in the recessed groove 25 flows to the flat surface 22a and acts on lubrication with the roller end surface 13a. However, by satisfying M - ΔP ≤ D - 2H, a surface of the roller end surface 13a that comes into contact with the flange portion 12b can also come into contact with the flat surface 22a by rotation, so that the lubricant is supplied, and the lubrication property between the roller end surface 13a and the flange portion 12b can be satisfactorily maintained.

A lower limit of the recessed groove 25 is formed so as to satisfy 0.2 × D ≤ M - ΔP. Thereby, the circumferential width M of the outer circumferential side end surface 25a of the recessed groove 25 is ensured, whereby oil discharge property of the grease is improved. The lubricant is sufficiently stored in the recessed groove 25, and the grease that remains on the roller end surface 13a is prevented from being scraped off by the recessed groove 25. If M - ΔP < 0.2 × D, the oil discharge property is deteriorated, the running-in operation time is likely to be prolonged, a temperature is likely to rise due to stirring resistance, and abnormal heat generation is likely to occur, and the area of the grease that can remain on the roller end surface 13a is reduced, resulting in reduction in an amount of grease base oil supplied from the roller end surface 13a to the flange portion 12b. The recessed groove 25 is more preferably formed so as to satisfy 0.3 × D ≤ M - ΔP. Thereby, the running-in operation time of the grease can be reduced and a problem of abnormal heat generation can be improved.

As described above, according to the cylindrical roller bearing 10 according to the present embodiment, the single recessed groove 25 is formed in the inner wall surface of each of the pair of circular ring portions 22 forming the pocket portion 21, the recessed groove 25 facing at least the center point O of the roller end surface 13a of the cylindrical roller 13 and open from the inner circumferential surface to the outer circumferential surface of the circular ring portion 22, and the recessed groove 25 is spaced apart in the circumferential direction from the pocket corner portion 26 between the circular ring portion 22 and the column portion 23. Thereby, satisfactory lubrication property can be obtained in the oil-air lubrication or the grease lubrication, and skew of the cylindrical roller can be prevented.

The present invention is not limited to the embodiment described above, and modifications, improvements and the like can be made as appropriate.

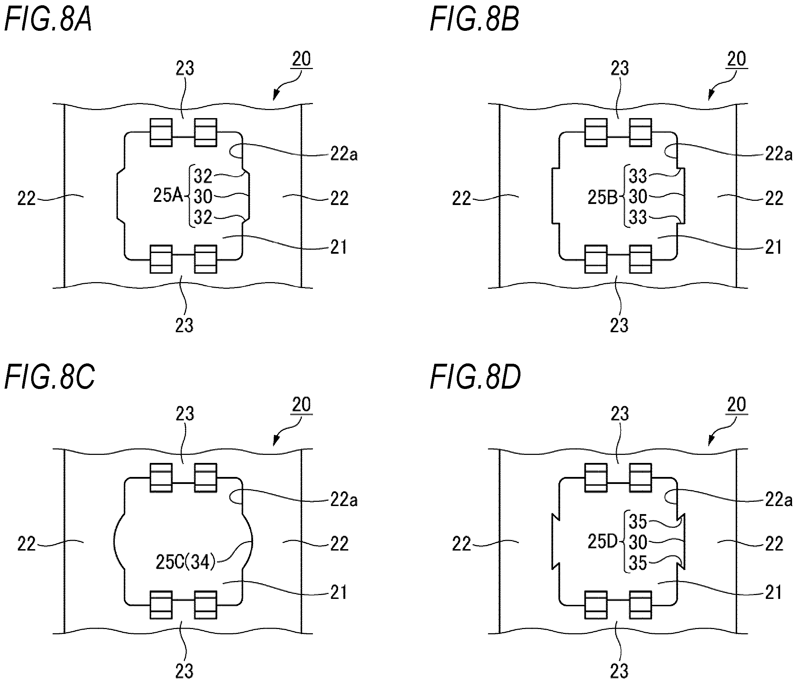

For example, a shape of the recessed groove 25 is not limited to that in the above-described embodiment, and may be as shown in Figs. 8A to 8D.

Specifically, as shown in Fig. 8A, a recessed groove 25A may be configured to have inclined surfaces 32, 32 provided on circumferentially both sides of the straight surface 30, so as to alleviate stress concentration due to the recessed groove 25a and improve oil discharge property in a balanced manner.

As shown in Fig. 8B, a recessed groove 25B may be configured to have a straight surface 30 and vertical surfaces 33, 33 provided vertically intersecting with circumferentially both sides of the straight surface 30, so as to improve oil discharge property.

As shown in Fig. 8C, a recessed groove 25C may be formed by a single circular arc surface 34 so as to alleviate stress concentration due to the recessed groove 25C.

As shown in Fig. 8D, a recessed groove 25D may be configured to have the straight surface 30 and inclined surfaces 35, 35 on circumferentially both sides of the straight surface 30, the inclined surfaces 35, 35 being inclined such that a circumferential width of the recessed groove 25D becomes wider from an opening toward the straight surface 30, so as to hold a larger amount of lubricant.
In the above modifications, the recessed grooves 25 to 25D are configured to have the same cross-sectional shape in the radial direction, but may have different cross-sectional shapes in the radial direction, such as a cross-sectional shape increasing toward the outer ring side.

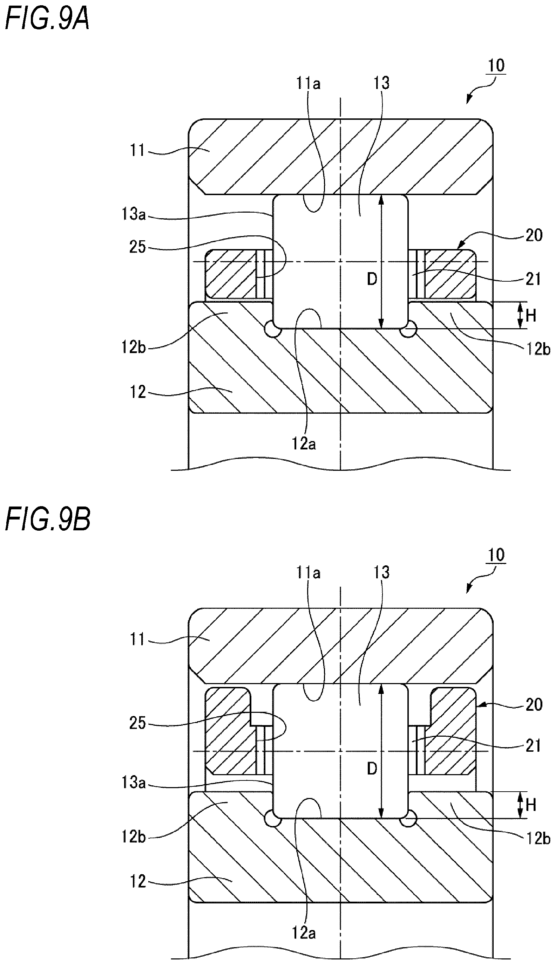

The cage 20 according to the present invention is not limited to the above-described roller guide type, and may be an inner ring guide type shown in Fig. 9A or an outer ring guide type shown in Fig. 9B.

In the cage 20 according to the present invention, a shape of the column portion 23 having the roller holding portions 24, 24 is not limited to the above-described embodiment, and may have another shape.

The present invention is not limited to a single-row cylindrical roller bearing, and may be applied to a double-row cylindrical roller bearing.

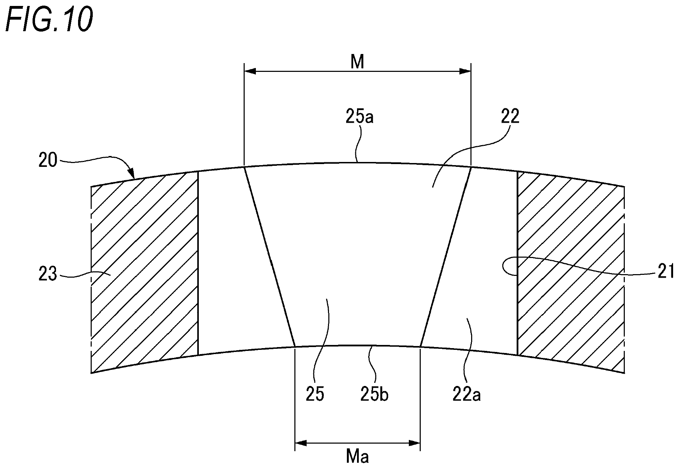

In addition, in the above embodiment, the circumferential width of the recessed groove 25 is formed to be equal from the outer circumferential side end surface 25a to the inner circumferential side end surface 25b, but the recessed groove according to the present invention is not limited thereto, and the circumferential width M at the outer circumferential side end surface 25a may be formed to be larger than a circumferential width at the inner circumferential side end surface 25b. For example, as shown in Fig. 10, the recessed groove 25 is formed such that the circumferential width gradually decreases from the outer circumferential side end surface 25a to the inner circumferential side end surface 25b.

When the circumferential width M at the outer circumferential side end surface 25a is larger than the circumferential width at the inner circumferential side end surface 25b, a lower limit of the circumferential width of the recessed groove 25 is designed to be established at a circumferential width Ma at the inner circumferential side end surface 25b.

That is, in any of the above-described embodiment in which the circumferential width of the recessed groove is equal from the outer circumferential side end surface to the inner circumferential side end surface and the modification in which the circumferential width M at the outer circumferential side end surface 25a is larger than the circumferential width Mb at the inner circumferential side end surface 25b, the circumferential width Ma of the recessed groove 25 at the inner circumferential side end surface 25b is formed to satisfy 0.2 × D ≤ Ma - ΔP.

The present application is based on a Japanese patent application (Japanese Patent Application No. 2018-205628) filed on October 31, 2018.

### REFERENCE SIGNS LIST

10 cylindrical roller bearing
11 outer ring
11a outer ring raceway surface
12 inner ring
12a inner ring raceway surface
13 cylindrical roller
20 cage
21 pocket portion
22 circular ring portion
23 column portion
25 recessed groove
D roller diameter
H height of flange portion
M circumferential width of outer circumferential side end surface
ΔP pocket clearance in circumferential direction

## Claims

1. A cylindrical roller bearing comprising:
an outer ring having an outer ring raceway surface formed on an inner circumferential surface thereof;
an inner ring having an inner ring raceway surface formed on an outer circumferential surface thereof and having a pair of flange portions at both axial end portions of the inner ring raceway surface;
a plurality of cylindrical rollers rollably arranged between the outer ring raceway surface and the inner ring raceway surface; and
a cage made of resin and having a pair of circular ring portions and a plurality of column portions connecting the pair of circular ring portions in an axial direction, the cage forming a plurality of pocket portions that rotatably hold the plurality of cylindrical rollers respectively,
wherein a single recessed groove is formed in an inner wall surface of each of the pair of circular ring portions forming the pocket portion, the recessed groove facing at least a center point of a roller end surface of the cylindrical roller and open from an inner circumferential surface to an outer circumferential surface of the circular ring portion,
wherein the recessed groove is spaced apart in a circumferential direction from a pocket corner portion between the circular ring portion and the column portion, and
wherein the recessed groove is formed such that a circumferential width thereof is equal from an outer circumferential side end surface to an inner circumferential side end surface thereof, or a circumferential width at the outer circumferential side end surface thereof is larger than a circumferential width at the inner circumferential side end surface thereof,
**characterized in that** when the circumferential width of the recessed groove at the outer circumferential side end surface is M, a roller diameter of the cylindrical roller is D, a height of the flange portion is H, and a circumferential pocket clearance is ΔP, M - ΔP ≤ D - H and 0.2 × D ≤ M - ΔP are satisfied.

## Patentansprüche

1. Zylinderrollenlager, das umfasst:
einen Außenring, der eine an einer Innenumfangsfläche desselben ausgebildete Außenring-Laufbahnfläche aufweist;
einen Innenring, der eine an einer Innenumfangsfläche desselben ausgebildete Innenring-Laufbahnfläche aufweist und ein Paar von Flanschabschnitten an beiden axialen Endabschnitten der Innenring-Laufbahnfläche aufweist;
eine Vielzahl von Zylinderrollen, die zwischen der Außenring-Laufbahnfläche und der Innenring-Laufbahnfläche so angeordnet sind, dass sie rollen können; sowie
einen aus Kunststoff bestehenden Käfig, der ein Paar kreisförmiger Ringabschnitte und eine Vielzahl von Säulenabschnitten aufweist, die die paarigen kreisförmigen Ringabschnitte in einer axialen Richtung verbinden, wobei der Käfig eine Vielzahl von Taschenabschnitten bildet, die jeweils die Vielzahl zylindrischer Rollen drehbar aufnehmen,
wobei eine einzelne vertiefte Nut in einer Innenwandfläche jedes der paarigen kreisförmigen Ringabschnitte ausgebildet ist, die den Taschenabschnitt bildet, wobei die vertiefte Nut wenigstens einem Mittelpunkt einer Rollen-Endfläche der zylindrischen Rolle zugewandt ist und von einer Innenumfangsfläche zu einer Außenumfangsfläche des kreisförmigen Ringabschnitts offen ist,
die vertiefte Nut in einer Umfangsrichtung von einem Taschen-Eckenabschnitt zwischen dem kreisförmigen Ringabschnitt und dem Säulenabschnitt beabstandet ist, und
die vertiefte Nut so ausgebildet ist, dass ihre Umfangsbreite von einer Endfläche an einer Außenumfangs-Seite zu einer Endfläche an einer Innenumfangs-Seite derselben gleich ist, oder eine Umfangsbreite an der Endfläche an einer Außenumfangs-Seite derselben größer ist als eine Umfangsbreite an der Endfläche an einer Innenumfangs-Seite derselben,
**dadurch gekennzeichnet, dass,** wenn die Umfangsbreite der vertieften Nut an der Endfläche an einer Außenumfangs-Seite M ist, ein Rollendurchmesser der zylindrischen Rolle D ist, eine Höhe des Flanschabschnitts H ist und ein Taschen-Abstand in Umfangsrichtung ΔP ist, M - ΔP ≤ D - H sowie 0,2 x D ≤ M - ΔP gelten.

## Revendications

1. Roulement à rouleaux cylindriques comprenant :
une bague externe comportant une surface de chemin de roulement de bague externe formée sur sa surface circonférentielle interne,
une bague interne comportant une surface de chemin de roulement de bague interne formée sur sa surface circonférentielle externe et possédant une paire de collerettes aux deux extrémités axiales de la surface de chemin de roulement de bague interne,
une pluralité de rouleaux cylindriques disposés pour pouvoir rouler entre la surface de chemin de roulement de bague externe et la surface de chemin de roulement de bague interne, et
une cage constituée de résine et comportant une paire de bagues circulaires et une pluralité de colonnes reliant la paire de bagues circulaires dans la direction axiale, la cage formant une pluralité de niches qui supportent respectivement en rotation la pluralité de rouleaux,
dans lequel une rainure simple en creux est formée dans une surface de paroi interne de chacune de la paire de bagues circulaires formant la niche, la rainure en creux faisant face au moins au point central d'une surface terminale de rouleau du rouleau cylindrique et étant ouverte depuis la surface circonférentielle interne jusqu'à la surface circonférentielle externe de la bague circulaire,
dans lequel la rainure en creux est espacée dans la direction circonférentielle d'un coin de niche situé entre la bague circulaire et la colonne, et
dans lequel la rainure en creux est formée de sorte à ce que sa largeur circonférentielle soit identique depuis sa surface terminale de côté circonférentiel externe jusqu'à sa surface terminale de côté circonférentiel interne, ou bien la largeur circonférentielle au niveau de sa surface terminale de côté circonférentiel externe est plus grande que la largeur circonférentielle au niveau de sa surface terminale de côté circonférentiel interne,
**caractérisé en ce que,** lorsque la largeur circonférentielle de la rainure en creux au niveau de la surface terminale de côté circonférentiel externe vaut M, que le diamètre de rouleau du rouleau cylindrique vaut D, que la hauteur de la collerette vaut H et que le jeu circonférentiel de la niche vaut ΔP, alors les inéquations M - ΔP ≤ D - H et 0,2 x D ≤ M - ΔP sont satisfaites.
